# EUROPÄISCHE PATENTSCHRIFT

(11) **EP 2 344 784 B1**
(45) Veröffentlichungstag und Bekanntmachung des Hinweises auf die Patenterteilung: **22.05.2013**
(21) Anmeldenummer: 09744971.4
(22) Anmeldetag: 02.11.2009
(51) Int. Cl.: F16H 48/22, F16H 48/30

(54) **AKTIVE DIFFERENTIALANORDNUNG FÜR EIN KRAFTFAHRZEUG**
ACTIVE DIFFERENTIAL ASSEMBLY FOR A MOTOR VEHICLE
AGENCEMENT DIFFÉRENTIEL ACTIF POUR UN VÉHICULE AUTOMOBILE

(30) Priorität: 10.11.2008 DE 102008056622
(43) Veröffentlichungstag der Anmeldung: 20.07.2011
(73) Patentinhaber: Volkswagen Aktiengesellschaft, 38440 Wolfsburg (DE)
(72) Erfinder: PETERSEN, Rainer, 38444 Wolfsburg (DE); SUE, Armin, 38527 Meine (DE); LUTZ, Andreas, 38100 Braunschweig (DE); MÖCKEL, Jörg, 09122 Chemnitz (DE); TENBERGE, Peter, 09123 Chemnitz (DE); MEISSNER, Christian, 09117 Chemnitz (DE)
(86) Internationale Anmeldenummer: PCT/EP2009/007817
(87) Internationale Veröffentlichungsnummer: WO 2010/051951

(56) Entgegenhaltungen:
- WO-A1-02/09966
- WO-A1-2006/010931
- WO-A2-2005/116489
- WO-A2-2008/038020
- DE-A1- 19 524 547
- DE-A1-102006 008 236
- US-A- 6 120 407

## Beschreibung

Die Erfindung betrifft eine Differentialanordnung für ein Kraftfahrzeug, umfassend ein Hauptdifferential in Planeten- oder Kegelradbauweise, welches ein über eine Antriebswelle eingeleitetes Antriebsmoment auf eine erste und eine zweite Abtriebswelle verteilt und ein mit dem Hauptdifferential gekoppeltes, steuerbares Hilfsgetriebe, mit dem die Verteilung des Antriebsmomentes regelbar ist, wobei das Hilfsgetriebe ein erstes, ein zweites und ein drittes Planetengetriebe umfasst, die miteinander gekoppelt sind, wobei das zweite und dritte Planetengetriebe jeweils ein bremsbares Getriebeelement aufweisen, wobei die Planetengetriebe mehrere Planetenräder aufweisen.

Grundsätzliche Aufgabe eines Differentials in einem Kraftfahrzeug ist es, ein eingeleitetes Antriebsmoment auf zwei Abtriebswellen zu verteilen. Hierzu sind Stimraddifferentiale, Kegelraddifferentiale und Kronenraddifferentiale bekannt.

Aktive Differentiale erlauben die gezielte Beeinflussung dieser Momentenverteilung, um unterschiedlichen Fahrsituationen gerecht zu werden. Hierzu werden Getriebeelemente des Differentials gezielt mittelbar oder unmittelbar gebremst und/oder miteinander gekoppelt. Es wird hierbei zwischen verstärkenden und nicht verstärkenden Anordnungen unterschieden. Die DE 10 2006 008 236 beispielsweise offenbart ein aktives, nicht verstärkendes Differential, bei dem das Hauptdifferential als Planetengetriebe ausgebildet ist, dessen Sonne und dessen Steg jeweils mit einer Abtriebswelle verbunden sind und über dessen Hohlrad das Antriebsmoment eingeleitet wird. Das Hohlrad ist mit der Eingangswelle einer Beschleunigungsstufe gekoppelt, welche eine im Vergleich zu der Antriebsdrehzahl um ca. 10% höhere Ausgangsdrehzahl liefert. Zur aktiven Momentenverschiebung werden die Ausgangswelle der Beschleunigungsstufe und jeweils eine der Abtriebswellen über Reibkupplungen miteinander gekoppelt. Das gesamte zu verschiebende Moment liegt dabei in den Kupplungen an. Bei alternativen Systemen können einzelne Elemente des Differentials relativ zu einem fahrzeugfesten Gehäuse abgebremst werden. Bei diesen verstärkenden Anordnungen ist das an den Bremsen anliegende Moment deutlich geringer als das Verschiebemoment. In derartigen Systemen herrscht typischer Weise eine sehr viel größere Drehzahldifferenz, die auf Raddrehzahlniveau liegt.

Die WO 2005/116489, die ein verstärkendes, aktives Differential offenbart, beschreibt eine Anordnung mit einem Hauptdifferential und einem steuerbaren Hilfsgetriebe, welches zwei Planetengetriebe umfasst. Durch die Hilfsgetriebe, deren Sonnenräder jeweils über regelbare Bremsen gegenüber dem fahrzeugfesten Gehäuse abbremsbar sind, werden Elemente des Hauptdifferentials nur mittelbar gebremst. Hierdurch ergibt sich eine Reduktion des in den Bremsen anliegenden, maximalen Drehmoments. Die Planetengetriebe sind als so genannte Minusgetriebe, d.h. Planetengetriebe mit negativen Standübersetzungen, ausgebildet. Dies führt im Vergleich zu ähnlichen Anordnungen mit Plusgetrieben, d.h. Getrieben mit positiven Standübersetzungen, wie sie beispielsweise aus der US 6,120,407 bekannt sind, zu einem besseren Wirkungsgrad und einer verbesserten Regelbarkeit, da Momentensprünge, wie sie insbesondere beim Wechsel der Kurvenrichtung und der damit verbundenen Richtungsumkehr der Planetenabwälzbewegung auftreten können, deutlich reduziert werden. Allerdings hat die gattungsgemäße Differentialanordnung gegenüber der Anordnung mit Plusgetrieben den Nachteil deutlich größerer maximaler Drehzahldifferenzen. Um hier eine erwünschte maximale Drehzahldifferenz von ca. 10% zu erreichen, müssten die Minusgetriebe der bekannten Anordnung Standübersetzungen von -4 bis -5 aufweisen, was unter Bauraumaspekten in typischen Kraftfahrzeugen nur schwer oder gar nicht möglich ist.

Des Weiteren ist es für Differentialgetriebe unter anderem mit dem Ziel einer kompakten Bauweise bekannt, dass bei einer Mehrzahl von einzelnen Übersetzungsstufen oder Planetengetriebekonfigurationen zwei oder mehrere Getriebebauteile, insbesondere Zahnräder, zu einem Bauteil derart integriert werden, dass das Bauteil zwei oder mehr Verzahnungen trägt und ursprünglich unabhängigen Bauteile miteinander gekoppelt sind, so dass sie in einem Drehmomentfluss liegen oder synchron bewegbar sind. Als publizierte Beispiele sind diesbezüglich unter anderem zu nennen: die gattungsbildende WO 2008/038020 A2, und weiter WO 2002/09966 A1, DE 195 24 547 A1 und WO 2006/010931 A1.

Ausgehend vom Dokument WO 2005/116489 ist die Aufgabe der vorliegenden Erfindung, das gattungsbildende Getriebe in der Art weiterzubilden, dass das System geringe Verlustleistungen aufweist und vom Aufbau hinsichtlich Montageaufwand und Herstellkosten optimiert wird.

Diese Aufgabe wird durch eine Differentialanordnung mit den Merkmalen des Anspruchs 1 gelöst. Vorteilhafte Ausgestaltungen sind in den abhängigen Ansprüchen genannt.

Bei einer Differentialanordnung für ein Kraftfahrzeug der eingangs beschriebenen Art ist es erfindungsgemäß vorgesehen, dass das zweite und dritte Planetengetriebe mindestens ein gemeinsames, mit einer Verzahnung versehenes, Bauteil aufweisen. Der Kern der Erfindung liegt darin, durch die Verwendung von funktionsintegrierten Bauelementen, die als Koppelelemente zwischen den einzelnen Getriebebaugruppen wirken eine kompakte Konstruktion zu erreichen und die Anzahl der erforderlichen Bauteile zu reduzieren. Durch diese Reduzierung der Bauteile und die Vereinfachung des Aufbaus gegenüber dem Stand der Technik wird auch die Verlustleistung des Systems gegenüber den bisher bekannten Ausführungsformen reduziert.

Eine mögliche Ausführung dieses gemeinsamen Bauteiles für das zweite und dritte Planetengetriebe ist, für beide Getriebe ein gemeinsames Hohlrad zu verwenden. Mit diesem

Hohlrad würden dann sowohl die Planetenräder des zweiten als auch die des dritten Planetengetriebes in Eingriff stehen. Dadurch ergibt sich die Möglichkeit, hier ein Hohlrad einzusparen und so die Bauteilvielfalt zu reduzieren.

Die ein Planetengetriebe wesentlich charakterisierende Eigenschaft ist seine Standübersetzung. Die Standübersetzungen des ersten Planetengetriebes des Hilfsgetriebes erfüllen erfindungsgemäß eine besondere Randbedingung. Das Getriebe ist als so genanntes Minusgetriebe, das bedeutet mit einer negativen Standübersetzung ausgelegt. Sie liegt vorzugsweise zwischen -1,3 und -4,0, insbesondere zwischen -1,7 und -2,4. Auf diese Weise ist ein relativ kleiner radialer Bauraum realisierbar.

Nach einem zweiten Aspekt der Erfindung, der ebenfalls von dem Grundgedanken ausgeht, durch Funktionsintegration die Anzahl der benötigten Bauteile zu reduzieren, wird vorgeschlagen, dass Planetenräder des ersten Planetengetriebes mit Zahnrädern des Hauptdifferentials Drehmoment übertragend verbunden sind. Dadurch wird eine sehr kompakte Konstruktion der gesamten Differentialanordnung möglich.

Eine weitere vorteilhafte Gestaltung ergibt sich, wenn eine Verbindung des Hauptdifferentials mit dem ersten Planetengetriebe in der Art erfolgt, dass Zahnräder des Hauptdifferentials und des ersten Planetengetriebes eine gemeinsame Stegwelle aufweisen. Ein derartiger Aufbau ermöglicht eine Bauteilreduzierung durch den Entfall einer separaten Stegwelle, was sich wiederum positiv auf den benötigten Bauraum an dieser Stelle der Differentialanordnung auswirkt.

Für die Ausgestaltung der Differentialanordnung kann es vorteilhaft sein, die Planetenräder des ersten Planetengetriebes über ein Hohlrad mit dem Planetenrädern des Hauptdifferentials in Planetenbauweise zu verbinden. Dieser Aufbau eröffnet ebenfalls die eingangs beschriebene Möglichkeit, das erste Planetengetriebe mit einer negativen Standübersetzung und dem sich daraus ergebenden Bauraumvorteil auszulegen

Ebenfalls positiv hinsichtlich des erforderlichen Bauraumes ist es, wenn das zweite und das dritte Planetengetriebe zu einem Vier-Wellen Getriebe zusammengefasst werden. Durch diese Ausführungsform, bei der für das zweite und das dritte Planetengetriebe ein gemeinsames Hohlrad verwendet wird, können ein Hohlrad und eine Stegwelle eingespart werden. Positiv auf den Bauraumbedarf wirkt sich weiterhin aus, dass die Stegwelle des zweiten Planentegetriebes direkt mit der Hauptwelle verbunden ist. Dadurch wird die Lagerung der Stegwelle erheblich vereinfacht.

Dieser Vorteil des Vier-Wellen Getriebes wird unterstützt, wenn die Planeten des zweiten und/oder des dritten Planetengetriebes als Ravineaux-Anordnung ausgeführt sind. Diese spezielle Anordnung der Planeten ermöglicht aufgrund ihrer Konstruktion eine hohe Leistungsdichte bei geringem Bauraumbedarf.

Durch die Verbindung von Sonnenrad- bzw. Stegwelle des zweiten und dritten Planetengetriebes mit einem bremsbaren Getriebeelement ist es möglich, gezielt Drehmomente zwischen der ersten und zweiten Abtriebswelle zu verschieben. Die bremsbaren Getriebeelemente werden vorzugsweise als hydraulisch betätigte Bremsen ausgeführt. Allerdings ist auch der Einsatz beispielsweise elektrischer Aktuatoren denkbar.

Als Alternative zu der vorstehend beschriebenen Ausführungsform für das zweite und dritte Planetengetriebe ein gemeinsames Hohlrad zu verwenden, gibt es auch die Möglichkeit, die Planenten des zweiten und dritten Planetengetriebes mit einem gemeinsamen Sonnenrad kämmen zu lassen. Auch diese Lösung ermöglicht, die Anzahl der Bauteile im Getriebe zu reduzieren.

Alle beschriebenen Ausgestaltungen haben aufgrund ihres Aufbaus den Vorteil, dass die Anzahl der rotierenden Bauteile im Vergleich zum Stand der Technik reduziert wird. Dadurch reduzieren sich die bewegten Massen innerhalb der Differentialanordnung, was sich positiv auf den Wirkungsgrad der Anordnung auswirkt und zu einer Reduzierung der Verlustleistung des Systems führt.

Neben der Ausführungsform des ersten Planetengetriebes mit einer negativen Standübersetzung ist auch eine Variante denkbar, bei der dieses erste Planetengetriebe eine positive Standübersetzung hat. Sie liegt vorzugsweise zwischen 1,3 und 4,0. Dieses so genannte Plusgetriebe wird vorzugsweise mit dem zweiten und dritten Planetengetriebe, die ein gemeinsames Sonnerad besitzen, verbunden. Das zweite und dritte Planetengetriebe sind in diesem Fall in der Form von zwei dreiwelligen Planetengetrieben gestaltet.

Die Gestaltung des Hauptdifferentials ist mit unterschiedlichen Bauweisen möglich. Bevorzugt ist das Hauptdifferential als Stirnraddifferential und insbesondere als Planetengetriebe oder als Kegelraddifferential ausgebildet. Alternativ kann das Hauptdifferential auch auf andere Weise ausgebildet sein.

Ausführungsbeispiele der erfindungsgemäßen Differentialanordnungen ergeben sich aus der detaillierten Beschreibung der beigefügten Figuren. Dabei zeigen:
- Fig.1: eine erste erfindungsgemäße Differentialanordnung mit einem Hauptdifferential in Planetenbauweise;
- Fig.2: eine erste Variante einer erfindungsgemäßen Differentialanordnung mit einem Hauptdifferential in Planetenbauweise;
- Fig.3: eine zweite Variante einer erfindungsgemäßen Differentialanordnung mit einem Hauptdifferential in Planetenbauweise;
- Fig.4: eine dritte Variante einer erfindungsgemäßen Differentialanordnung mit einem Hauptdifferential in Planetenbauweise;
- Fig.5: eine Schnittdarstellung einer konstruktiven Ausführung der Differentialanordnung gemäß Fig.1;
- Fig.6: eine Variante einer erfindungsgemäße Differentialanordnung mit einem Hauptdifferential in Kegelradbauweise.

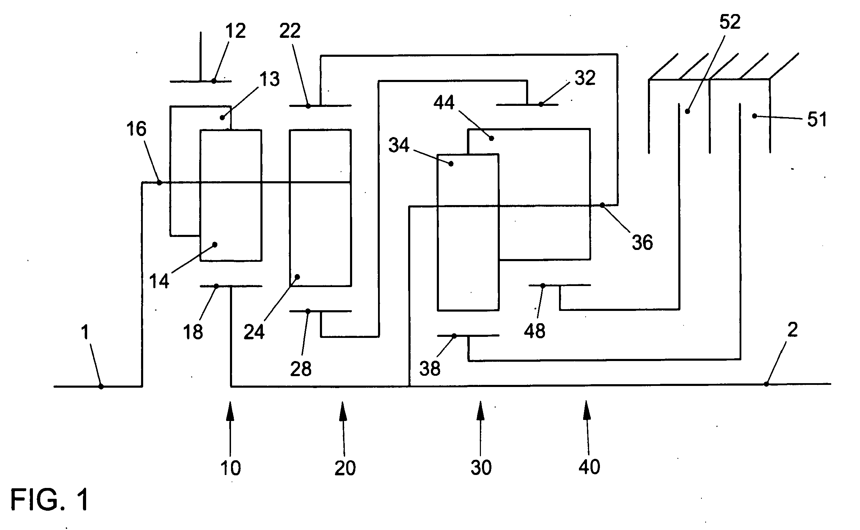

Figur 1 zeigt eine bevorzugte Ausführungsform einer erfindungsgemäßen Differentialanordnung zur Verteilung eines Antriebsmomentes auf eine erste Abtriebswelle 1 und eine zweite Abtriebswelle 2. Hierzu ist ein Hauptdifferential 10 und ein aus den Planetengetrieben 20, 30, 40 aufgebautes Hilfsgetriebe vorgesehen. Das Hauptdifferential 10 ist bei der gezeigten Ausführungsform als Stirnraddifferential, insbesondere als ein Doppelplanetendifferential ausgebildet. Das Antriebsmoment wird über das Hohlrad 12 eingeleitet. Die erste Abtriebswelle 1 ist mit dem Steg 16 verbunden, der einen ersten Satz Planetenräder 13, die mit dem Hohlrad 12 kämmen, und einen zweiten.Satz Planentenräder 14 trägt, die mit dem Sonnenrad 18 kämmen. Das Sonnenrad 18 ist mit der zweiten Abtriebswelle 2 verbunden.

Der Steg 16 und das Sonnenrad 18 des Hauptdifferentials 10 sind zur aktiven Momentenverschiebung mit dem Hilfsgetriebe verbunden. Das Hilfsgetriebe umfasst ein Lastgetriebe 20 sowie ein erstes Steuergetriebe 30 und ein zweites Steuergetriebe 40. Die Zuordnung des Lastgetriebes 20 und der Steuergetriebe 30, 40 zum Wortlaut des Hauptanspruchs ist wie folgt: das Lastgetriebe 20 entspricht dem ersten Planetengetriebe des Hauptanspruchs. Das erste Steuergetriebe 30 entspricht dem zweiten Planetengetriebe des Hauptanspruchs. Das zweite Steuergetriebe 40 entspricht dem dritten Planetengetriebe des Hauptanspruchs. Die Bezeichnung "Lastgetriebe" resultiert aus der Tatsache, dass bei der gezeigten Ausführungsform nahezu das gesamte zu verschiebende Moment an dem ersten Planetengetriebe 20 anliegt und dieses entsprechend stark ausgebildet sein muss. Diese strukturbedingte Aufteilung in ein hoch belastetes Lastgetriebe 20 und zwei gering belastete Steuergetriebe 30 und 40 erlaubt es, die Planentenräder der Steuergetriebe als sehr schmale Zahnräder auszuführen, was sich positiv auf den axialen Bauraumbedarf auswirkt.

Der Steg 16 des Hauptdifferentials und somit die erste Abtriebswelle 1 ist mit den Planetenrädern 24 des Lastgetriebes 20 verbunden. Die Planetenräder 24 kämmen mit dem Hohlrad 22 und dem Sonnenrad 28 des Lastgetriebes. Das Sonnenrad 18 des Hauptdifferentials 10 und somit die zweite Abtriebswelle 2 ist mit dem gemeinsamen Steg 36 der Steuergetriebe 30 und 40, der einen Satz Planetenräder 33,34 in Ravigneaux-Anordnung trägt und dem Hohlrad 22 des Lastgetriebes 20, verbunden. In dieser Ravigneaux-Anordnung werden kurze Planetenräder 34 und lange Planetenräder 44 verwendet.

Das Sonnenrad 28 des Lastgetriebes 20 ist mit dem Hohlrad 32 verbunden. Die langen Planetenräder 44 kämmen mit dem Hohlrad 32 und dem Sonnenrad 48 des zweiten Steuergetriebes 40. Das Sonnenrad 48 ist mit einer regelbaren Bremse 52 verbunden, die die Bewegung des Sonnenrades 48 gegenüber einem fahrzeugfesten Gehäuse abbremsen kann.

Die kurzen Planetenräder 34 des ersten Steuergetriebes 30 kämmen mit dem Sonnenrad 38 des ersten Steuergetriebes 30 und den langen Planentenrädern 44. Das Sonnenrad 38 ist mit einer regelbaren Bremse 51 verbunden, die die Bewegung des Sonnenrades 38 gegenüber einem fahrzeugfesten Gehäuse abbremsen kann.

Die Standübersetzungen der in Fig.1 gezeigten Anordnung betragen beispielsweise für das Hauptdifferential 10 +2,0, für das Lastgetriebe 20 -1,9, für das erste Steuergetriebe 30 +1,9 und für das zweite Steuergetriebe 40 -1,6. Diese Gestaltung führt zu einem sehr kleinen radialen Bauraum. Die strukturbedingten Abhängigkeiten der Standübersetzungen der einzelnen Planetengetriebe ermöglichen auch eine Anpassung an nichtzylindrische Bauräume (z.B. konischer Bauraum: +2,0 / -2,0 / +1,8 / -1,5). Der axiale Bauraumbedarf konnte durch die neue Getriebestruktur mit zusammengefassten Stegwellen erheblich verringert werden.

Da die Standübersetzungen der einzelnen Planentengetriebe nicht in der Nähe von +1 liegen und die Anbindung der für eine Momentenverschiebung im Getriebe abzubremsenden Steuergetriebe an die Bremsen 51 und 52 über die Sonneräder 38 und 48 erfolgt, führt diese Getriebestruktur zu einem sehr geringen Drehmomentsprung beispielsweise bei einem Wechsel von einer Links- in eine Rechtskurve.

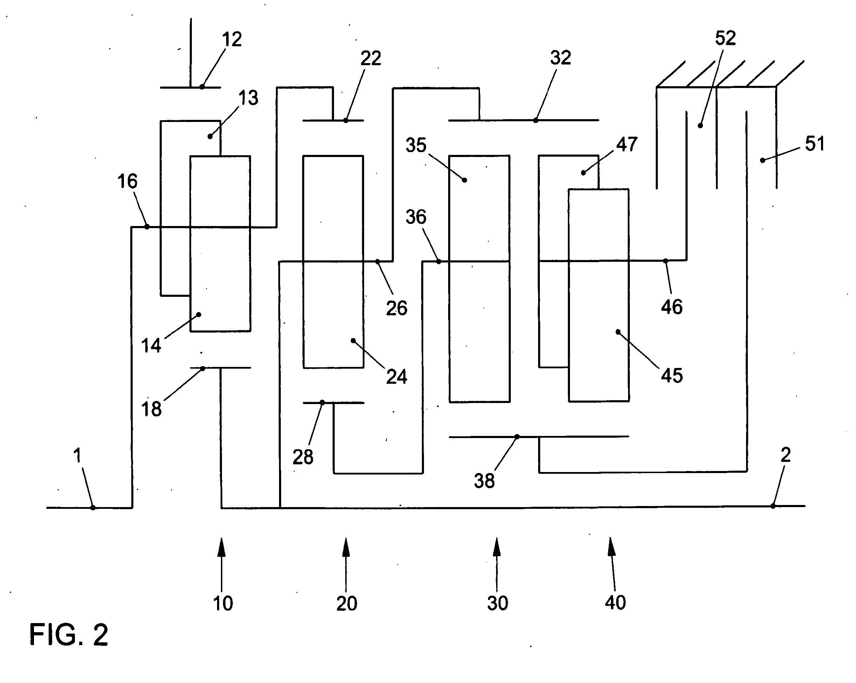

Figur 2 zeigt eine weitere Ausführungsform der erfindungsgemäßen Differentialanordnung. Der prinzipielle Aufbau mit Hauptdifferential 10 und den Planetengetrieben 20, 30, 40 ist gleich dem der in der Fig. 1 beschriebenen Differentialanordnung. Der Aufbau des Hauptdifferentials 10 ist ebenfalls identisch dem in Fig. 1. Entsprechende Bauteile werden mit gleichen Bezugszeichen wie die in Fig. 1 bezeichnet.

Abweichend zu der Anordnung in Fig. 1 ist in dieser Ausführungsform der Steg 16 mit dem Hohlrad 22 des Lastgetriebes verbunden.

Die Planetenräder 24 des Lastgetriebes 20 kämmen mit dem Hohlrad 22 und dem Sonnenrad 28 des Lastgetriebes. Das Hohlrad 22 ist mit dem Steg 16 des Hauptdifferentials 10 verbunden. Der Steg 26 des Lastgetriebes 20 ist sowohl mit dem Hohlrad 32 des ersten Steuergetriebes als auch mit der zweiten Abtriebswelle 2 verbunden. Das Sonnerad 28 des Lastgetriebes 20 ist mit dem Steg 36 des ersten Steuergetriebes 30 verbunden. Dieser Steg 36 trägt die Planetenräder 35, die mit dem Hohlrad 32 und dem Sonnenrad 38 kämmen. Das Sonnenrad 38 ist mit einer regelbaren Bremse 51 verbunden, die die Bewegung des Sonnenrades 38 gegenüber einem fahrzeugfesten Gehäuse abbremsen kann.

In dem zweiten Steuergetriebe 40 trägt ein Steg 46 einen ersten Satz Planetenräder 47, der mit dem Hohlrad 32 kämmt und eine zweiten Satz Planetenräder 45, der mit dem Sonnenrad 38 kämmt. Die Stegwelle 46 ist ebenfalls mit einer regelbaren Bremse 52 verbunden.

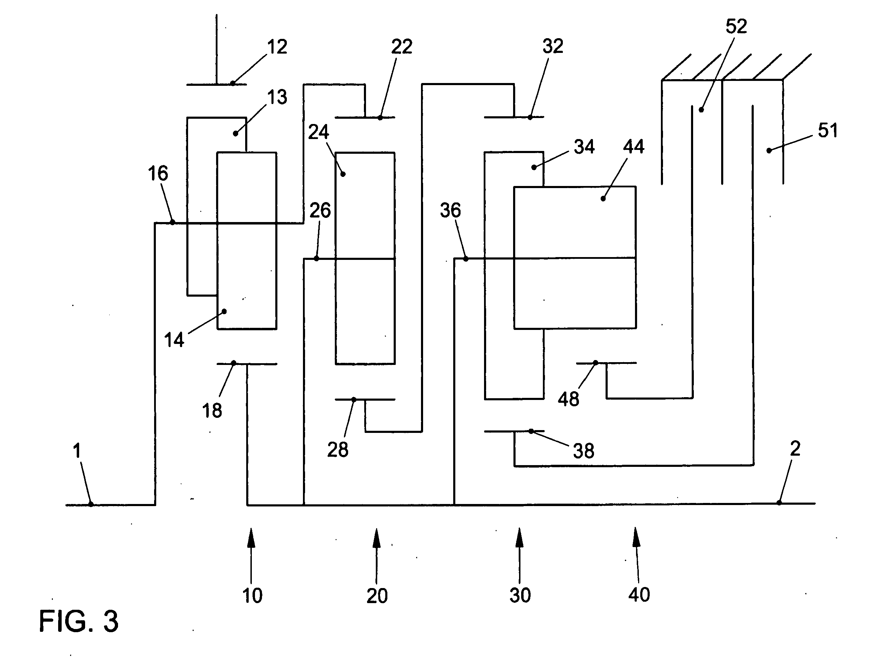

Eine weitere Ausführungsform der erfindungsgemäßen Differentialanordnung zeigt die Fig. 3. Diese gleicht im Aufbau der in der Fig. 2 beschriebenen Anordnung bis auf die Anordnungen im ersten 30 und zweiten 40 Steuergetriebe. Hier findet wieder eine Anordnung der Planetenräder in Ravigneaux- Bauweise ähnlich der in Fig. 1 beschriebenen Anordnung Anwendung. Auch in dieser Ravigneaux- Anordnung werden kurze Planetenräder 34 und lange Planetenräder 44 verwendet.

Das Sonnenrad 28 des Lastgetriebes 20 ist mit dem Hohlrad 32 verbunden. Die kurzen Planetenräder 34 kämmen mit dem Hohlrad 32 und dem Sonnenrad 38 des ersten Steuergetriebes 30. Die langen Planetenräder 44 des zweiten Steuergetriebes 30 kämmen mit dem Sonnenrad 48 des zweiten Steuergetriebes 40. Das Sonnenrad 38 ist mit der regelbaren Bremse 51 und das Sonnenrad 48 ist mit der regelbaren Bremse 52 verbunden.

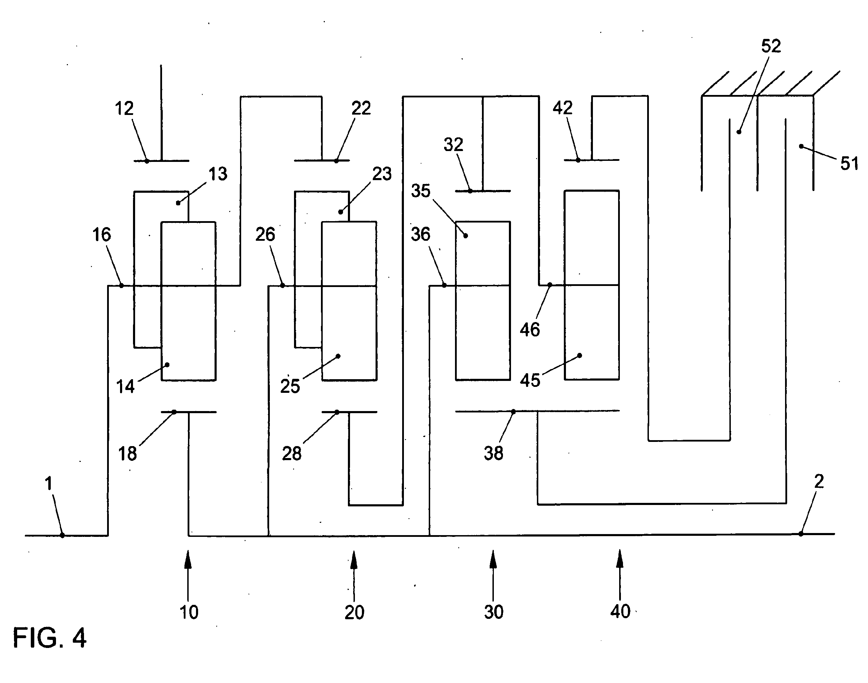

Die Fig. 4 stellt eine weitere denkbare Ausgestaltung der erfindungsgemäßen Differentialanordnung dar. Auch hier ist der Aufbau des Hauptdifferentials 10 gleich dem der in Fig. 1 beschriebenen Aufbau. Der Aufbau des Lastgetriebes 20 und der Steuergetriebes 30 und 40 unterscheidet sich jedoch von den vorstehend beschriebenen Anordnungen.

Die Anbindung an den Steg des Hauptdifferentials 10 und an die erste Antriebswelle 1 erfolgt entsprechend der bisher beschriebenen Anordnungen über das Hohlrad 22, welches mit der Stegwelle 16 des Hauptdifferentials 10 verbunden ist.

Das Hohlrad 22 kämmt mit einem ersten Satz Planetenräder 23, die von dem Steg 26 getragen werden. Dieser Steg 26 trägt einen zweiten Satz Planentenräder 25, die mit dem Sonnenrad 28 kämmen und ist mit der zweiten Abtriebswelle 2 verbunden.

Das Sonnenrad 28 des Lastgetriebes 20 ist sowohl mit dem Hohlrad 32 des ersten Steuergetriebes als auch mit dem Steg 46 des zweiten Steuergetriebes 40 verbunden. Der Steg 36 des ersten Steuergetriebes 30 ist mit der zweiten Abtriebswelle 2 verbunden und trägt einen ersten Satz Planetenräder 35, die sowohl mit dem Sonnenrad 38 als auch mit dem Hohlrad 32 kämmen. Das Sonnenrad 38 ist, wie in den vorstehenden Ausführungen ebenfalls beschrieben, mit einer regelbaren Bremse 51 verbunden.

Der mit dem Sonnenrad 28 des Lastgetriebes 20 verbundene Steg 46 des zweiten Steuergetriebes 40 trägt einen Satz Planetenräder 45, die zum einen mit dem Sonnenrad 38 des ersten Steuergetriebes 30 als auch dem Hohlrad 42 des zweiten Steuergetriebes 40 kämmen. Das Hohlrad 42 ist in dieser Ausführungsform mit der regelbaren Bremse 52 verbunden, die die Bewegung des Hohlrades 42 gegenüber einem fahrzeugfesten Gehäuse abbremsen kann.

Bei Betrieb werden mittels der regelbaren Bremse 51 das Sonnenrad 38 des ersten Steuergetriebes 30 und/oder mit der Bremse 52, wie vorstehende beschrieben, Komponenten des zweiten Steuergetriebes 40 graduell abgebremst. Hierdurch ergibt sich im Hauptdifferential 10 eine gezielt beeinflussbare Momentenverschiebung zwischen der ersten Abtriebswelle und der zweiten Abtriebswelle. Das Drehmoment einer Bremse ist nur dann regelbar, wenn zwischen deren Elementen, d.h. beispielsweise zwischen deren Reiblamellen, eine Drehzahldifferenz ungleich Null vorliegt.

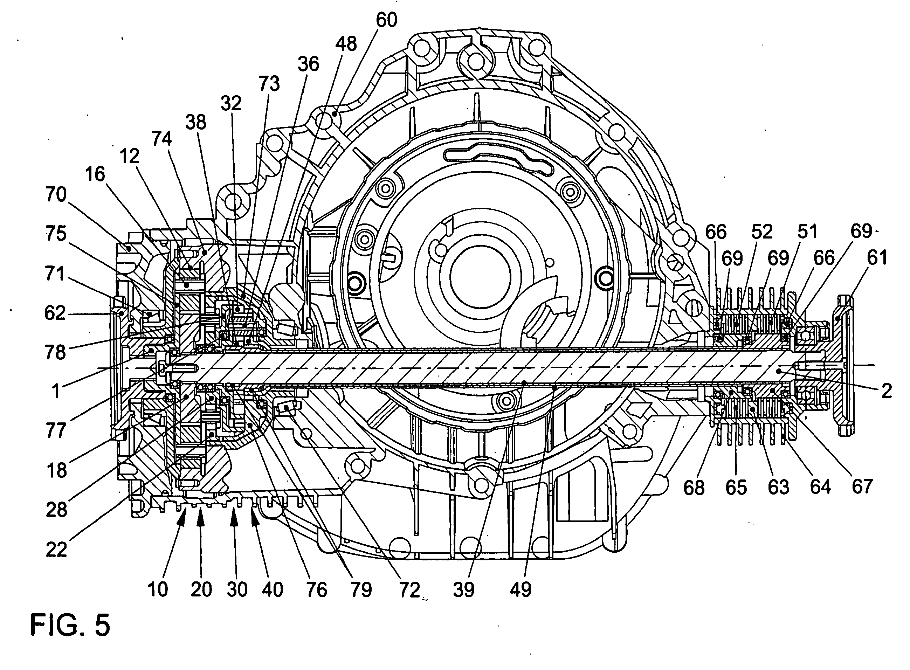

Die Figur 5 zeigt einen Schnitt durch ein Getriebegehäuse 60 quer zur Fahrtrichtung im Bereich der vorderen Flanschwellenanschlüsse links 61 und rechts 62. In Fahrtrichtung links befindet sich zwischen dem Getriebegehäuse 60 und dem linken Flanschwellenanschluss 61 die Bremseneinheit 63. Diese Bremseneinheit 63 nimmt die bremsbaren Getriebeelemente bzw. die regelbaren Bremsen 51 und 52 auf. Der Außenbereich der Bremseneinheit 63 ist in mit Kühlrippen 64 versehen, um die im Betrieb auftretende Wärme an die Umgebung abzuführen. Die Bremsen 51 und 52 sind über eine erste Hohlwelle 39 und eine zweite Hohlwelle 49, welche konzentrisch um die zweite Abtriebswelle 2 angeordnet sind, mit der Differentialanordnung verbunden. Die Bremsen 51,52 sind in der gezeigten Ausführungsform als Lamellenbremsen ausgelegt. Diese Lamellen 65 können hydraulisch betätigt werden, um eine der Hohlwellen 39,49 gegenüber der Bremseneinheit 63 fest zu halten. Dazu werden die Kolben 66 von einer nicht dargestellten Hydraulikeinheit mit Drucköl versorgt. Die Verbindung der Lamellen 65 zu den Hohlwellen 39 und 49 erfolgt über einen entsprechenden ersten Lamellenträger 67 und eine zweiten Lamellenträger 68. Diese Lamellenträger 67 und 68 sind über Rillenkugellager 69 in der Bremseneinheit gelagert.

Auf der in Fahrtrichtung rechten Seite sind die einzelnen Planetengetriebe 10, 20, 30, 40 der Differentialanordnung im Getriebegehäuse 60 angeordnet. Das Getriebegehäuse 60 wird gegenüber der Umgebung mit Hilfe eines Gehäusedeckels 70 verschlossen, der ein Kegelrollenlager 71 zur Lagerung der Differentialanordnung aufweist. Ein zweites Kegelrollenlager 72 lagert einen Hohlradträger 73 gegenüber dem Getriebegehäuse 60. Die Außenkontur des Hohlrads 12 weist ein Tellerrad 74 auf, welches zur Einleitung des Antriebsmomentes von einer nicht dargestellten Triebwelle in die Differentialanordnung dient.

In der Schnittdarstellung ist zu erkennen, dass das Sonnenrad 18 direkt mit der Abtriebswelle 2 verbunden und die Stege 16 über einen ersten Träger 75 mit der Abtriebswelle 1 und damit mit der Flanschanschlusswelle 62 verbunden sind. Außerdem ist ein zweiter Träger 76 dargestellt, der zum einen das Hohlrad 22 des Lastgetriebes 20 als auch die Lagerung des Steges 36 beinhaltet. Ferner dient dieser zweite Träger 76 zur Lagerung des Hohlrades 22 über ein Rillenkugellager gegenüber dem Hohlradträger 73 und zur Verbindung der Abtriebswelle 2. Weiterhin ist die Gestaltung eines dritten Trägers 78 zu erkennen, der das Sonnerad 28 und das Hohlrad 32 drehfest miteinander verbindet. Dieser dritte Träger 78 dient außerdem zur Lagerung von Sonnenrad 28 und Hohlrad 32 über entsprechende Rillenkugellager 77. Zur. Lagerung der ersten 39 und zweiten Hohlwelle 49 und der mit ihnen fest verbundenen Sonnenräder 38 und 48 werden Nadellager 79 verwendet. Die Lagerung der ersten Hohlwelle 39 erfolgt auf der Abtriebswelle 2. Die zweite Hohlwelle 49 wird mit einem Nadellager 79 auf der ersten Hohlwelle 39 gelagert.

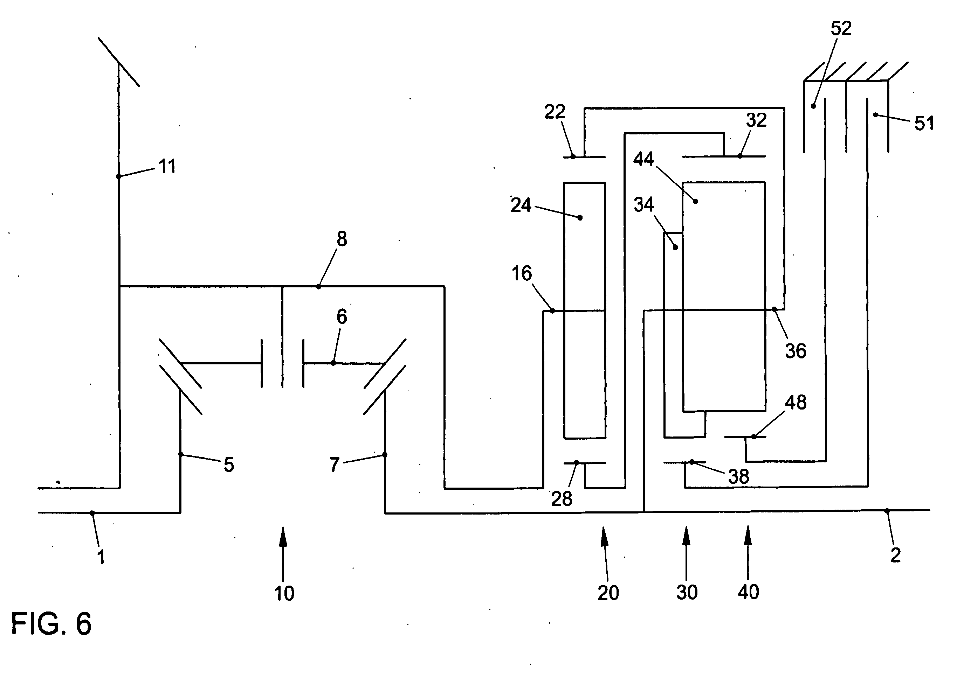

Figur 6 zeigt eine weitere Ausführungsform der erfindungsgemäßen Differentialanordnung. Das Hauptdifferential 10 ist bei der gezeigten Ausführungsform als Kegelraddifferential ausgebildet. Das Antriebsmoment wird über das Antriebsrad 11 eingeleitet. Dieses Antriebsrad 11 ist über einen Steg 8 sowohl mit einem zweiten Kegelrad 6 als auch mit dem Steg 16, der auch den Planetenradsatz 24 des zweiten Planetengetriebes 20 trägt, verbunden. Dieses zweite Kegelrad 6 kämmt zum einem mit einem ersten Kegelrad 5, das der ersten Abtriebswelle 1 verbunden ist, als auch mit einem dritten Kegelrad 7, das mit der zweiten Abtriebswelle 2 verbunden ist. Das für die Funktion eines Kegelraddifferentials notwendige vierte Kegelrad ist hier nicht dargestellt.

Der Steg 16 des Hauptdifferentials ist mit den Planetenrädern 24 des Lastgetriebes 20 verbunden. Die Planetenräder 24 kämmen mit dem Hohlrad 22 und dem Sonnenrad 28 des Lastgetriebes. Das Kegelrad 7 des Hauptdifferentials 10 und somit die zweite Abtriebswelle 2 ist mit dem gemeinsamen Steg 36 der Steuergetriebe 30 und 40, der einen Satz Planetenräder 34,44 in Ravigneaux-Anordnung trägt und dem Hohlrad 22 des Lastgetriebes 20 verbunden. In dieser Ravigneaux-Anordnung werden kurze Planetenräder 34 und lange Planetenräder 44 verwendet.

Das Sonnenrad 28 des Lastgetriebes 20 ist mit dem Hohlrad 32 verbunden. Die langen Planetenräder 44 kämmen mit dem Hohlrad 32 und dem Sonnenrad 48 des zweiten Steuergetriebes 40. Das Sonnenrad 48 ist mit einer regelbaren Bremse 52 verbunden, die die Bewegung des Sonnenrades 48 gegenüber einem fahrzeugfesten Gehäuse abbremsen kann.

Die kurzen Planetenräder 34 des ersten Steuergetriebes 30 kämmen mit dem Sonnenrad 38 des ersten Steuergetriebes 30 und den langen Planentenrädern 44. Das Sonnenrad 38 ist mit einer regelbaren Bremse 51 verbunden, die die Bewegung des Sonnenrades 38 gegenüber einem fahrzeugfesten Gehäuse abbremsen kann.

Natürlich stellt die in der speziellen Beschreibung diskutierte und in der Zeichnung gezeigte Ausführungsform nur ein illustratives Ausführungsbeispiel der vorliegenden Erfindung dar. Dem Fachmann ist im Lichte der hiesigen Offenbarung ein breites Spektrum an Variationsmöglichkeiten anhand gegeben. Insbesondere kann die konkrete Ausführung des Hauptdifferentials 10 von den gezeigten Beispielen eines stirnverzahnten Doppelplanetengetriebes oder eines Kegelraddifferentials abweichen und zum Beispiel die Form eines Kronenraddifferentials annehmen. Auch die Raddurchmesser, Zähnezahlen, Materialien und sonstigen Auslegungsmerkmale der einzelnen Elemente der erfindungsgemäßen Anordnung können vom Fachmann an die Anforderungen des Einzelfalls angepasst werden.

### Bezugszeichenliste

| | |
|---|---|
| 1 | erste Abtriebswelle |
| 2 | zweite Abtriebswelle |
| 5 | erstes Kegelrad |
| 6 | zweites Kegelrad |
| 7 | drittes Kegelrad |
| 8 | Steg |
| 10 | Hauptdifferential |
| 11 | Antriebsrad |
| 12 | Hohlrad von 10 |
| 13 | erster Planetenradsatz von 10 |
| 14 | zweiter Planetenradsatz von 10 |
| 16 | Steg von 10 |
| 18 | Sonnenrad von 10 |
| 20 | Lastgetriebe; erstes Planetengetriebe |
| 22 | Hohlrad von 20 |
| 23 | erster Planetenradsatz von 20 |
| 24 | Planetenradradsatz von 20 |
| 25 | zweiter Planetenradsatz von 20 |
| 26 | Steg von 20 |
| 28 | Sonnenrad von 20 |
| 30 | zweites Planetengetriebe |
| 32 | Hohlrad von 30 |
| 34 | kurzer Planetenradsatz der Ravigneaux-Anordnung |
| 35 | Planetenradsatz von 30 |
| 36 | Steg von 30 |
| 38 | Sonnenrad von 30 |
| 39 | erste Hohlwelle |
| 40 | drittes Planetengetriebe |
| 42 | Hohlrad von 40 |
| 44 | langer Planetenradsatz der Ravigneaux-Anordnung |
| 45 | Planetenradsatz von 40 |
| 46 | Steg von 40 |
| 47 | Planetenradsatz von 40 |
| 48 | Sonnenrad von 40 |
| 49 | zweite Hohlwelle |
| 51 | regelbare Bremse |
| 52 | regelbare Bremse |
| 60 | Getriebegehäuse |
| 61 | linke Flanschwelle |
| 62 | rechte Flanschwelle |
| 63 | Bremseneinheit |
| 64 | Kühlrippen |
| 65 | Lamellen |
| 66 | Kolben |
| 67 | ester Lamellenträger |
| 68 | zweiter Lamellenträger |
| 69 | Rillenkugellager |
| 70 | Gehäusedeckel |
| 71 | Kegelrollenlager |
| 72 | Kegelrollenlager |
| 73 | Hohlradträger |
| 74 | Tellerrad |
| 75 | erster Träger |
| 76 | zweiter Träger |
| 77 | Rillenkugellager |
| 78 | dritter Träger |
| 79 | Nadellager |

## Patentansprüche

1. Differentialanordnung für ein Kraftfahrzeug, umfassend
- ein Hauptdifferential (10) in Planeten- oder Kegelradbauweise, welches ein über eine Antriebswelle eingeleitetes Antriebsmoment auf eine erste (1) und eine zweite (2) Abtriebswelle verteilt und
- ein mit dem Hauptdifferential (10) gekoppeltes, steuerbares Hilfsgetriebe, mit dem die Verteilung des Antriebsmomentes regelbar ist,
wobei das Hilfsgetriebe ein erstes (20), ein zweites (30) und ein drittes (40) Planetengetriebe umfasst, die miteinander gekoppelt sind, wobei das zweite (30) und dritte (40) Planetengetriebe jeweils ein bremsbares Getriebeelement (51, 52) aufweisen, wobei die Planetengetriebe mehrere Planetenräder aufweisen,
**dadurch gekennzeichnet,**
**dass** das zweite (30) und dritte (40) Planetengetriebe mindestens ein gemeinsames, mit einer Verzahnung versehenes, Bauteil (32, 34, 38, 44) aufweisen, wobei die eine Verzahnung des Bauteils (32, 34, 38, 44) sowohl im zweiten (30) als auch im dritten (40) Planetengetriebe in Eingriff steht.

2. Differentialanordnung nach Anspruch 1, **dadurch gekennzeichnet, dass** das Bauteil (32) ein Hohlrad (32) ist.

3. Differentialanordnung nach Anspruch 1 oder 2, **dadurch gekennzeichnet, dass** das erste Planetengetriebe (20) eine negative Standübersetzung hat.

4. Differentialanordnung nach einem der Ansprüche 1 bis 3
**dadurch gekennzeichnet, dass** die Planetenräder (24) des ersten (20) Planetengetriebes mit den Zahnrädern (6, 13, 14) des Hauptdifferentials (10) Drehmoment übertragend verbunden sind.

5. Differentialanordnung nach Anspruch 4, **dadurch gekennzeichnet, dass** die Zahnräder (6; 13, 14,) des Hauptdifferentials (10) und die Planetenräder (24) des ersten Planetengetriebes (20) mindestens eine gemeinsame Stegwelle (16) aufweisen.

6. Differentialanordnung nach einem der Ansprüche 1 bis 4, **dadurch gekennzeichnet, dass** das Hauptdifferential (10) ein Planetengetriebe ist und die Planetenräder (24) des ersten Planetengetriebes (20) über ein Hohlrad (22) mit den Planentenrädern (13, 14) des Hauptdifferentials (10) verbunden sind.

7. Differentialanordnung nach Anspruch 1 oder 2, **dadurch gekennzeichnet, dass** das zweite (30) und das dritte (40) Planetengetriebe zu einem Vier-Wellen Getriebe zusammengefasst sind.

8. Differentialanordnung nach einem der Ansprüche 1, 2 oder 4, **dadurch gekennzeichnet, dass** die Planetenräder des zweiten (30) und/oder des dritten (40) Planetengetriebes als Ravineaux-Anordnung ausgeführt sind.

9. Differentialanordnung nach einem der vorhergehenden Ansprüche, **dadurch gekennzeichnet, dass** eine oder mehrere Sonnenradwellen (38, 48) eines zweiten (30) und/oder dritten (40) Planetengetriebes mit einem bremsbaren Getriebeelement (51, 52) verbunden sind.

10. Differentialanordnung nach einem der vorhergehenden Ansprüche, **dadurch gekennzeichnet, dass** eine Stegwelle (36, 46) eines zweiten (30) und/oder dritten (40) Planetengetriebes mit einem bremsbaren Getriebeelement (51, 52) verbunden ist.

11. Differentialanordnung nach Anspruch 1, **dadurch gekennzeichnet, dass** das Bauteil (38) ein Sonnenrad (38) ist.

12. Differentialanordnung nach Anspruch 1 oder 11, **dadurch gekennzeichnet, dass** das erste Planetengetriebe (20) eine positive Standübersetzung aufweist.

13. Differentialanordnung nach Anspruch 11, **dadurch gekennzeichnet, dass** das zweite (30) und das dritte (40) Planetengetriebe als Dreiwellengetriebe ausgeführt sind.

## Claims

1. Differential arrangement for a motor vehicle, comprising
- a main differential (10) of planetary or bevel gear design which distributes a drive moment which is introduced via a drive shaft to a first (1) and a second (2) output shaft, and
- a controllable auxiliary gear mechanism which is coupled to the main differential (10) and by way of which the distribution of the drive moment can be regulated,
the auxiliary gear mechanism comprising a first (20), a second (30) and a third (40) planetary gear mechanism which are coupled to one another, the second (30) and third (40) planetary gear mechanism in each case having a gear-mechanism element (51, 52) which can be braked, the planetary gear mechanisms having a plurality of planetary gears, **characterized in that** the second (30) and third (40) planetary gear mechanism have at least one common component (32, 34, 38, 44) which is provided with a toothing system, the one toothing system of the component (32, 34, 38, 44) being in engagement both in the second (30) and in the third (40) planetary gear mechanism.

2. Differential arrangement according to Claim 1, **characterized in that** the component (32) is an ring gear (32).

3. Differential arrangement according to Claim 1 or 2, **characterized in that** the first planetary gear mechanism (20) has a negative static gear ratio.

4. Differential arrangement according to one of Claims 1 to 3, **characterized in that** the planetary gears (24) of the first (20) planetary gear mechanism are connected in a torque-transmitting manner to the gearwheels (6, 13, 14) of the main differential (10).

5. Differential arrangement according to Claim 4, **characterized in that** the gearwheels (6, 13, 14) of the main differential (10) and the planetary gears (24) of the first planetary gear mechanism (20) have at least one common planet carrier shaft (16).

6. Differential arrangement according to one of Claims 1 to 4, **characterized in that** the main differential (10) is a planetary gear mechanism, and the planetary gears (24) of the first planetary gear mechanism (20) are connected via an ring gear (22) to the planetary gears (13, 14) of the main differential (10).

7. Differential arrangement according to Claim 1 or 2, **characterized in that** the second (30) and the third (40) planetary gear mechanism are combined to form a four-shaft gear mechanism.

8. Differential arrangement according to one of Claims 1, 2 or 4, **characterized in that** the planetary gears of the second (30) and/or the third (40) planetary gear mechanism are configured as a Ravigneaux arrangement.

9. Differential arrangement according to one of the preceding claims, **characterized in that** one or more sun-gear shafts (38, 48) of a second (30) and/or third (40) planetary gear mechanism is/are connected to a gear-mechanism element (51, 52) which can be braked.

10. Differential arrangement according to one of the preceding claims, **characterized in that** a planet carrier shaft (36, 46) of a second (30) and/or third (40) planetary gear mechanism is connected to a gear-mechanism element (51, 52) which can be braked.

11. Differential arrangement according to Claim 1, **characterized in that** the component (38) is a sun gear (38).

12. Differential arrangement according to Claim 1 or 11, **characterized in that** the first planetary gear mechanism (20) has a positive static gear ratio.

13. Differential arrangement according to Claim 11, **characterized in that** the second (30) and the third (40) planetary gear mechanism are configured as a three-shaft gear mechanisms.

## Revendications

1. Agencement différentiel pour un véhicule automobile, comprenant :
- un différentiel principal (10) de construction planétaire ou à roue conique, qui répartit un couple d'entraînement introduit par un arbre d'entraînement sur un premier (1) et un deuxième. (2) arbre de sortie et
- une transmission auxiliaire commandable accouplée au différentiel principal (10), avec laquelle la répartition du couple d'entraînement peut être réglée,
la transmission auxiliaire comprenant un premier (20), un deuxième (30) et un troisième (40) engrenage planétaire, lesquels sont accouplés les uns aux autres, le deuxième (30) et le troisième (40) engrenage planétaire présentant chacun un élément d'engrenage pouvant être freiné (51, 52), les engrenages planétaires présentant plusieurs pignons satellites,
**caractérisé en ce que**
le deuxième (30) et le troisième (40) engrenage planétaire présentent au moins un composant commun (32, 34, 38, 44) pourvu d'une denture, ladite denture du composant (32, 34, 38, 44) étant en prise à la fois dans le deuxième (30) et dans le troisième (40) engrenage planétaire.

2. Agencement différentiel selon la revendication 1, **caractérisé en ce que** le composant (32) est une couronne dentée (32).

3. Agencement différentiel selon la revendication 1 ou 2, **caractérisé en ce que** le premier engrenage planétaire (20) a une multiplication fixe négative.

4. Agencement différentiel selon l'une quelconque des revendications 1 à 3, **caractérisé en ce que** les pignons satellites (24) du premier (20) engrenage planétaire sont connectés par transmission de couple aux roues dentées (6, 13, 14) du différentiel principal (10).

5. Agencement différentiel selon la revendication 4, **caractérisé en ce que** les roues dentées (6, 13, 14) du différentiel principal (10) et les pignons satellites (24) du premier engrenage planétaire (20) présentent au moins un arbre porte-satellites commun (16).

6. Agencement différentiel selon l'une quelconque des revendications 1 à 4, **caractérisé en ce que** le différentiel principal (10) est un engrenage planétaire et les pignons satellites (24) du premier engrenage planétaire (20) sont reliés par le biais d'une couronne dentée (22) aux pignons satellites (13, 14) du différentiel principal (10).

7. Agencement différentiel selon la revendication 1 ou 2, **caractérisé en ce que** le deuxième (30) et le troisième (40) engrenage planétaire sont réunis pour former une transmission à quatre arbres.

8. Agencement différentiel selon l'une quelconque des revendications 1, 2 ou 4, **caractérisé en ce que**
les pignons satellites du deuxième (30) et/ou du troisième (40) engrenage planétaire sont réalisés sous forme d'agencement de type Ravigneaux.

9. Agencement différentiel selon l'une quelconque des revendications précédentes, **caractérisé en ce qu'**un ou plusieurs arbres de roue solaire (38, 48) d'un deuxième (30) et/ou d'un troisième (40) engrenage planétaire sont connectés à un élément de transmission pouvant être freiné (51, 52).

10. Agencement différentiel selon l'une quelconque des revendications précédentes, **caractérisé en ce qu'**un arbre de porte-satellites (36, 46) d'un deuxième (30) et/ou d'un troisième (40) engrenage planétaire est connecté à un élément de transmission pouvant être freiné (51, 52).

11. Agencement différentiel selon la revendication 1, **caractérisé en ce que** le composant (38) est une roue solaire (38).

12. Agencement différentiel selon la revendication 1 ou 11, **caractérisé en ce que** le premier engrenage planétaire (20) présente une multiplication fixe positive.

13. Agencement différentiel selon la revendication 11, **caractérisé en ce que** le deuxième (30) et le troisième (40) engrenage planétaire sont réalisés sous forme de transmission à trois arbres.
